# EUROPÄISCHE PATENTSCHRIFT

(11) **EP 4 098 345 B1**
(45) Veröffentlichungstag und Bekanntmachung des Hinweises auf die Patenterteilung: **14.02.2024**
(21) Anmeldenummer: 21176840.3
(22) Anmeldetag: 31.05.2021
(51) Int. Cl.: B01D 29/23, B01D 29/90

(54) **FILTEREINRICHTUNG UND BRENNSTOFFZELLENSYSTEM MIT FILTEREINRICHTUNG**
FILTER DEVICE AND FUEL CELL SYSTEM WITH FILTER DEVICE
DISPOSITIF FILTRE ET SYSTÈME DE PILE À COMBUSTIBLE POURVU DE DISPOSITIF FILTRE

(43) Veröffentlichungstag der Anmeldung: 07.12.2022
(73) Patentinhaber: Robert Bosch GmbH, 70442 Stuttgart (DE)
(72) Erfinder: HINOJOSA GARCIA, David Manuel, 28007 Madrid (ES); MONTERO BLANCO, Gonzalo, 28937 Mostoles, Madrid (ES); TEJEDOR DIAGO, Julio José, 28109 Alcobendas, Madrid (ES)

(56) Entgegenhaltungen:
- DE-A1-102019 121 342
- JP-U- S6 448 221
- US-A1- 2021 001 251

## Beschreibung

### Technisches Gebiet

Die vorliegende Erfindung betrifft eine Filtereinrichtung, insbesondere für ein flüssiges Medium wie beispielsweise ein Kühlmedium in einem Kühlkreislauf eines Brennstoffzellensystems, sowie ein Brennstoffzellensystem mit einer solchen Filtereinrichtung.

### Stand der Technik

Brennstoffzellen kommen zunehmend als Energiewandler, unter anderem auch in Fahrzeugen, zum Einsatz, um in einem Brennstoff, wie z.B. Wasserstoff, gespeicherte chemische Energie zusammen mit Sauerstoff direkt in elektrische Energie umzuwandeln. Brennstoffzellen weisen typischerweise eine Anode, eine Kathode und eine zwischen Anode und Kathode angeordnete elektrolytische Membran auf. An der Anode erfolgt eine Oxidation des Brennstoffs und an der Kathode eine Reduktion des Sauerstoffs.

Bei der in der Brennstoffzelle ablaufenden chemischen Reaktion wird Wärme frei, welche üblicherweise über einen Kühlkreislauf abgeführt wird, insbesondere um ein Überhitzen der Membran zu verhindern und den Wirkungsgrad der Brennstoffzelle zu verbessern.

In der WO 2017/036878 A1 und der US 7 655 098 B2 werden jeweils Kühlkreisläufe für Brennstoffzellensysteme offenbart, in denen ein flüssiges Kühlmedium, wie entionisiertes Wasser, zirkuliert wird, wobei die Kühlkreisläufe jeweils Filtereinrichtungen zum Filtern des Kühlmediums enthalten.

Das Dokument US 2021/001251 A1 offenbart einen Filter mit Trägerstruktur, welche ein Filtermedium aufnimmt und wobei die Trägerstruktur Längsstreben und Ringstreben aufweist, zwischen denen Durchtrittsöffnungen gebildet sind. Ferner verjüngt sich der Filterquerschnitt konisch vom offenen zum geschlossenen Ende.

Das Dokument DE 10 2019 121342 A1 offenbart einen konischen Flüssigkeitsfilter mit Trägerstruktur und innenliegendem Filtermedium, wobei sich am geschlossenen Ende des Filters ein Strömungskörper befindet.

Das Dokument JP S64 48221 U 24 offenbart eine Filtereinrichtung mit konischer Trägerstruktur, wobei diese ein offenes und ein geschlossenes Ende, sowie Durchgänge aufweist. Innerhalb der Trägerstruktur ist ein Filtermedium aufgenommen.

### Offenbarung der Erfindung

Erfindungsgemäß sind eine Filtereinrichtung mit den Merkmalen des Anspruchs 1 sowie ein Brennstoffzellensystem mit den Merkmalen des Anspruchs 9 vorgesehen.

Gemäß einem ersten Aspekt der Erfindung ist eine Filtereinrichtung, insbesondere für ein flüssiges Medium wie beispielsweise ein Kühlmedium in einem Kühlkreislauf eines Brennstoffzellensystems vorgesehen. Die Filtereinrichtung umfasst eine sich zwischen einem ersten Ende und einem zweiten Ende erstreckende Trägerstruktur, welche einen von dem ersten Ende zu dem zweiten Ende hin verjüngenden Innenraum definiert, und ein Filtermedium, welches in dem Innenraum der Trägerstruktur aufgenommen ist. Die Trägerstruktur weist an dem zweiten Ende einen in Richtung des ersten Endes in den Innenraum hineinragenden Strömungskörper auf, welcher sich in Richtung des ersten Endes verjüngt, wobei die Trägerstruktur Durchgänge aufweist, welche den Innenraum fluidisch leitend mit einer Umgebung der Trägerstruktur verbinden; und ein Filtermedium, welches in dem Innenraum der Trägerstruktur aufgenommen ist, wobei die Filtereinrichtung zusätzlich einen an dem ersten Ende in den Innenraum der Trägerstruktur hineinragenden Leitungskörper aufweist, welcher einen sich zwischen einer Einlassöffnung und einer Auslassöffnung erstreckenden Strömungskanal definiert, wobei die Auslassöffnung dem Innenraum der Trägerstruktur zugewandt gelegen ist; und wobei der Strömungskanal einen sich zu der Auslassöffnung hin weitenden, insbesondere konisch weitenden, Auslassabschnitt aufweist.

Gemäß einem zweiten Aspekt der Erfindung umfasst ein Brennstoffzellensystem, eine Brennstoffzellenanordnung mit zumindest einer Brennstoffzelle und einen thermisch an die Brennstoffzellenanordnung gekoppelten Kühlkreislauf, welcher dazu eingerichtet ist, ein Kühlmittel zu zirkulieren, wobei der Kühlkreislauf eine Filtereinrichtung nach einem der voranstehenden Ansprüche aufweist, um das Kühlmittel zu filtern.

Eine der Erfindung zugrundeliegende Idee besteht darin, die Filtereinrichtung mit einer sich in einer ersten Durchströmungsrichtung verjüngenden Form auszubilden, um einen durch die Filtereinrichtung erzeugten Druckverlust zu reduzieren. Insbesondere ist hierzu eine mechanisch robuste Trägerstruktur oder Hülle vorgesehen, welche an einem ersten Ende eine Öffnung definiert, in welche das Kühlmittel einströmen kann, und an einem zweiten Ende einen Strömungs- oder Staukörper aufweist, welcher sich entlang der Strömungsrichtung aufweitet. Dadurch wird das Kühlmittel in einer radialen Richtung abgelenkt und es werden vorteilhaft Verwirbelungen und ähnliche Strömungsverluste im Bereich des zweiten Endes der Trägerstruktur reduziert. Gleichzeitig kann auch bei einer Durchströmung in einer zweiten Durchströmungsrichtung entgegengesetzt zu der ersten Durchströmungsrichtung vorteilhaft eine Verringerung von Verlusten erzielt werden.

Allgemein kann sich die Trägerstruktur entlang einer Längsachse erstrecken, welche vorzugsweise eine Mittelachse definiert. Die radiale Richtung erstreckt sich senkrecht zur Mittelachse. Das Filtermedium, ist in Bezug auf die radiale Richtung innen in der Trägerstruktur angeordnet und wird durch diese in radialer Richtung gestützt. Dadurch wird der Druck, bei dem die Filtereinrichtung arbeiten kann vorteilhaft vergrößert, wobei Beschädigungen des Filtermediums durch die Trägerstruktur vorgebeugt wird.

Das Filtermedium ist insbesondere zum Filtern bzw. Abscheiden von Partikeln aus einer Fluidströmung ausgebildet, erstreckt sich ebenfalls zwischen einem ersten und einem zweiten Ende und verjüngt sich zu dem zweiten Ende hin, vorzugsweise konisch. Das Filtermedium ist somit derart in dem Innenraum der Trägerstruktur aufgenommen, dass das zweite Ende des Filtermediums dem zweiten Ende der Trägerstruktur und das erste Ende des Filtermediums dem ersten Ende der Trägerstruktur zugewandt gelegen ist. Auf diese Weise kann die Trägerstruktur besonders einfach hergestellt werden, z.B. indem diese um das Filtermedium herum geformt wird, z.B. in einem Gießverfahren oder einem 3D-Druckverfahren.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß manchen Ausführungsformen kann vorgesehen sein, dass die Trägerstruktur konisch ausgebildet ist. Insbesondere kann der Innenraum sich konisch um eine Mittelachse erstrecken, wobei der Strömungskörper koaxial zu der Mittelachse angeordnet ist. Die konische Form ist vorteilhaft, um Strömungsverluste weiter zu reduzieren. Ferner wird die Fertigung der Filtereinrichtung erleichtert.

Gemäß manchen Ausführungsformen kann vorgesehen sein, dass der Strömungskörper konisch ausgebildet ist. Insbesondere ist hierbei eine Spitze des Strömungskörpers dem ersten Ende der Trägerstruktur zugewandt. Wenn die Trägerstruktur selbst konisch ist, ist der Konus des Strömungskörpers somit umgekehrt zu dem Konus der Trägerstruktur orientiert.

Gemäß manchen Ausführungsformen kann vorgesehen sein, dass die Trägerstruktur einen das erste Ende bildenden Endrahmen, eine das zweite Ende bildenden Endkörper und zumindest zwei an dem Rahmen beanstandet zueinander angeordnete Längsstreben aufweist, welche den Endkörper und den Endrahmen verbinden, wobei die Durchgänge zwischen den Längsstreben ausgebildet sind. Die Trägerstruktur ist somit als eine Art Gerüst realisiert. Der Endrahmen definiert eine Öffnung und kann beispielsweise ringförmig gestaltet sein. Der Endkörper kann insbesondere eine Spitze der Trägerstruktur bilden. Der Strömungskörper ist vorzugsweise einstückig mit dem Endkörper ausgebildet. Beispielsweise kann auch der Endkörper als Konus realisiert sein. Die Längsstreben sind in Bezug auf eine sich um die Mittel- oder Längsachse herum erstreckende Umfangsrichtung beabstandet und können ebenfalls einstückig mit dem Endkörper und/oder dem Endrahmen ausgebildet sein. Die Durchgänge sind in diesem Fall durch die Bereiche zwischen den Längsstreben ausgebildet. Ein Vorteil der gerüstförmigen Gestaltung liegt darin, dass diese mechanisch robust ist und große Durchgänge gebildet werden, so dass der Strömungsverlust durch die Filtereinrichtung weiter reduziert wird.

Gemäß manchen Ausführungsformen kann vorgesehen sein, dass die Trägerstruktur zumindest eine zwischen dem Endrahmen und dem Endkörper angeordnete Umfangsstreben aufweist, welche die Längsstreben miteinander verbindet, wobei die Durchgänge zwischen den Längsstreben und dem Umfangsstreben ausgebildet sind. Somit können zusätzlich zu den Längsstreben eine oder mehrere Umfangsstreben vorgesehen sein, welche sich quer zu den Längsstreben erstrecken, wobei jede Umfangsstrebe zumindest zwei Längsstreben miteinander verbindet. Beispielsweise können die Umfangsstreben als ringförmige oder allgemein geschlossene Rahmen ausgebildet sein, welche die Mittelachse oder Längsachse vollständig umschließen. Die Durchgänge sind aufgrund der Umfangsstreben somit als Fenster zwischen den Längs- und den Umfangstreben ausgebildet. Ein Vorteil der Umfangsstreben liegt darin, dass die Trägerstruktur mechanisch noch robuster wird und somit der Arbeitsdruck eines Kühlsystems bzw. allgemein des Mediums, das durch den Filter geleitet wird, weiter vergrößert werden kann.

Gemäß manchen Ausführungsformen kann vorgesehen sein, dass die Trägerstruktur aus einem Kunststoffmaterial, insbesondere einem duroplastischen Kunststoffmaterial, einem thermoplastischen Kunststoffmaterial oder einem faserverstärkten Kunststoffmaterial gebildet ist. Auf diese Weise kann die Trägerstruktur sehr einfach hergestellt werden, z.B. in einem Spritzgussverfahren oder einem additiven Herstellungsverfahren, wie 3D-Druck. Erfindungsgemäß weist die Filtereinrichtung einen an dem ersten Ende in den Innenraum der Trägerstruktur hineinragenden Leitungskörper aufweist, welcher einen sich zwischen einer Einlassöffnung und einer Auslassöffnung erstreckenden Strömungskanal definiert, wobei die Auslassöffnung dem Innenraum der Trägerstruktur zugewandt gelegen ist; und wobei der Strömungskanal einen sich zu der Auslassöffnung hin weitenden, insbesondere konisch weitenden, Auslassabschnitt aufweist. Der Strömungskanal kann insbesondere in die Trägerstruktur hineinragen, wobei durch den sich aufweitenden Strömungsquerschnitt im Auslassabschnitt des Strömungskanals Querschnittssprünge entlang des Strömungspfads und damit Druckverluste auf effiziente und einfache Weise reduziert werden.

Gemäß manchen Ausführungsformen kann vorgesehen sein, dass der Strömungskanal einen Zufuhrabschnitt aufweist, welcher sich mit konstantem Strömungsquerschnitt erstreckt, insbesondere zylindrisch, und wobei der Auslassabschnitt sich an den Zufuhrabschnitt anschließt. Somit werden einfache geometrische Strukturen realisiert, die sich leicht herstellen lassen. Beispielsweise kann der Zufuhrabschnitt sich von der Einlassöffnung aus erstrecken, wobei sich der Auslassabschnitt von einem abgewandt von der Einlassöffnung gelegenen Ende des Zufuhrabschnitts aus erstreckt und an der Auslassöffnung endet.

Gemäß manchen Ausführungsformen kann vorgesehen sein, dass die Filtereinrichtung ein Gehäuse aufweist, welches einen sich zwischen einer ersten Öffnung und einer zweiten Öffnung erstreckenden Aufnahmeraum definiert, wobei die Trägerstruktur derart in den Aufnahmeraum aufgenommen ist, dass das erste Ende der Trägerstruktur der ersten Öffnung zugewandt gelegen ist. Der optionale Leitungskörper kann gegebenenfalls z.B. im Bereich der ersten Öffnung mit dem Gehäuse verbunden sein und sich durch die erste Öffnung hindurch erstrecken bzw. in diese hineinragen. Das Gehäuse bildet somit einen Leitungsabschnitt zum Leiten von Kühlmedium aus.

Im Folgenden wird die Erfindung unter Bezugnahme auf die Figuren der Zeichnungen erläutert. Von den Figuren zeigen:
- Fig. 1: eine schematische Ansicht eines hydraulischen Schaltbilds eines Brennstoffzellensystems gemäß einem Ausführungsbeispiel der Erfindung;
- Fig. 2: eine schematische Schnittansicht einer Filtereinrichtung gemäß einem Ausführungsbeispiel der Erfindung; und
- Fig. 3: eine perspektivische Ansicht einer Filtereinrichtung gemäß einem Ausführungsbeispiel der Erfindung.

In den Figuren bezeichnen dieselben Bezugszeichen gleiche oder funktionsgleiche Komponenten, soweit nichts Gegenteiliges angegeben ist.

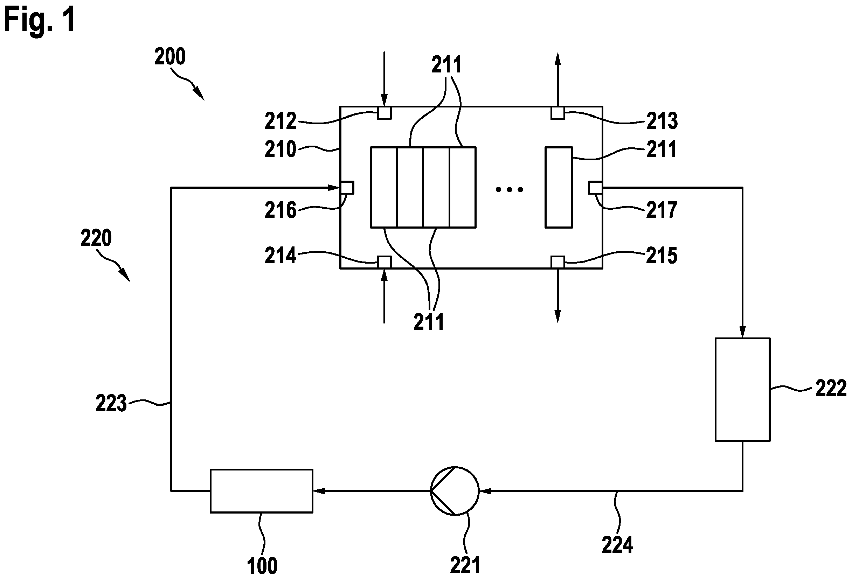

Fig. 1 zeigt schematisch ein Brennstoffzellensystem 200. Das Brennstoffzellensystem 200 weist eine Brennstoffzellenanordnung 210 und einen Kühlkreislauf 220 zum Kühlen der Brennstoffzellenanordnung 210 auf.

Wie in Fig. 1 schematisch dargestellt, kann die Brennstoffzellenanordnung 210 ein Vielzahl von Brennstoffzellen 211 aufweisen, welche z.B. zu einem sogenannten Stack verbaut sein können. Grundsätzlich weist die Brennstoffzellenanordnung 210 zumindest eine Brennstoffzelle 211 auf. Jede Brennstoffzelle 211 weist eine Kathode (nicht gezeigt), eine Anode (nicht gezeigt) und einen zwischen der Kathode und der Anode angeordneten Elektrolyten (nicht gezeigt) auf, z.B. in Form einer Membran. Die Brennstoffzellenanordnung 210 ist dazu eingerichtet, bei Zufuhr von Brennstoff, wie z.B. Wasserstoff, an die Anode und Zufuhr von Sauerstoff an die Kathode elektrische Energie zu erzeugen. An der Anode erfolgt eine Oxidation des Brennstoffs und an der Kathode eine Reduktion des Sauerstoffs. Wie in Fig. 1 schematisch dargestellt, kann die Brennstoffzellenanordnung 211 hierzu einen Brennstoffzufuhranschluss 212 zum Zuführen von Brennstoff an die Anode und einen Brennstoffabfuhranschluss 213 zum Abführen von nicht reagiertem Brennstoff von der Anode aufweisen. Ferner kann die Brennstoffzellenanordnung 211 einen Sauerstoffzufuhranschluss 214 zum Zuführen von Brennstoff an die Kathode und einen Sauerstoffabfuhranschluss 215 zum Abführen der Reaktionsprodukte von der Kathode aufweisen.

Der Kühlmittelkreislauf 220 ist in Fig. 1 lediglich schematisch dargestellt und dient zum Zirkulieren eines Kältemittels oder Kühlmediums, welches Wärme mit der Brennstoffzellenanordnung 210 austauscht. Wie in Fig. 1 beispielhaft gezeigt, kann der Kühlmittelkreislauf 220 eine Pumpe oder einen Verdichter 221, eine Filtereinrichtung 100 und einen Wärmetauscher 222 aufweisen.

Der Verdichter 221 ist dazu eingerichtet, das Kühlmedium zu fördern. Das Kühlmedium kann gasförmig oder flüssig sein. Beispielsweise kann als Kühlmedium entionisiertes Wasser oder eine andere Flüssigkeit verwendet werden. Ein Druckausgang des Verdichters 221 ist fluidisch leitend mit einem Kühlmitteleingang 216 der Brennstoffzellenanordnung 210 verbunden, z.B. durch eine Zufuhrleitung 223. Ein Saugeingang des Verdichters 222 ist mit einem Kühlmittelausgang 217 der der Brennstoffzellenanordnung 210 fluidisch leitend verbunden, z.B. über eine Saugleitung 224.

Wie in Fig. 1 schematisch dargestellt, ist der Wärmetauscher 222 zwischen dem Saugeingang des Verdichters 222 und dem Kühlmittelausgang 217 angeordnet, so dass diesem durch die Saugleitung 224 das aus der Brennstoffzellenanordnung 210 kommende Kühlmittel zuführbar ist. Der Wärmetauscher 222 ist an eine Wärmesenke, wie z.B. die Umgebung, gekoppelt, um dem Kühlmittel Wärme zu entziehen. Somit kann der Brennstoffzellenanordnung 210 durch den Verdichter 221 Kühlmittel zugeführt werden und der Brennstoffzellenanordnung 210 Wärme entziehen, wobei dem Kühlmittel in dem Wärmetauscher 222 wiederum Wärme entzogen wird. In der Brennstoffzellenanordnung 210 kann das Kühlmittel z.B. in einer thermisch leitend mit den Brennstoffzellen 211 verbundenen Kanalanordnung (nicht gezeigt) geleitet werden. Allgemein ist der Kältemittelkreislauf 210 thermisch an die Brennstoffzellenanordnung 210 gekoppelt.

Die Filtereinrichtung 100 kann insbesondere zwischen dem Druckausgang des Verdichters 221 und dem Kühlmitteleingang 216 der Brennstoffzellenanordnung 210 angeordnet sein, z.B. in der Zufuhrleitung 223, wie dies in Fig. 1 rein beispielhaft gezeigt ist. Grundsätzlich ist jedoch auch denkbar, dass die Filtereinrichtung 100 zwischen dem Saugeingang des Verdichters 222 und dem Kühlmittelausgang 217 angeordnet ist, z.B. in der Saugleitung 223. Die Filtereinrichtung 100 dient insbesondere zum Abscheiden bzw. Filtern von Partikeln, die im Kühlmittel vorhanden sein können. Beispielsweise können sich durch Verschleiß in verschiedenen Komponenten des Kühlmittelkreislaufs, wie dem Verdichter 221, Ventilen (nicht gezeigt) oder dem Wärmetauscher 222, Partikel lösen, welche durch das Kühlmittel abtransportiert werden und dadurch in die Brennstoffzellenanordnung 210 gelangen können.

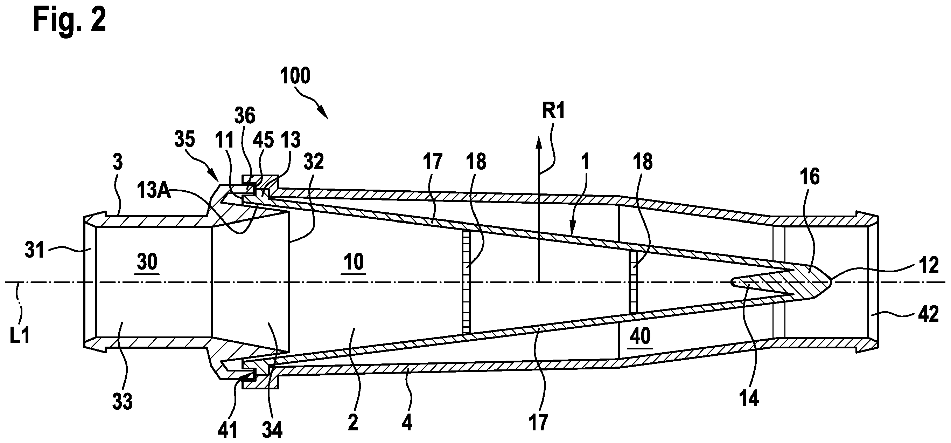

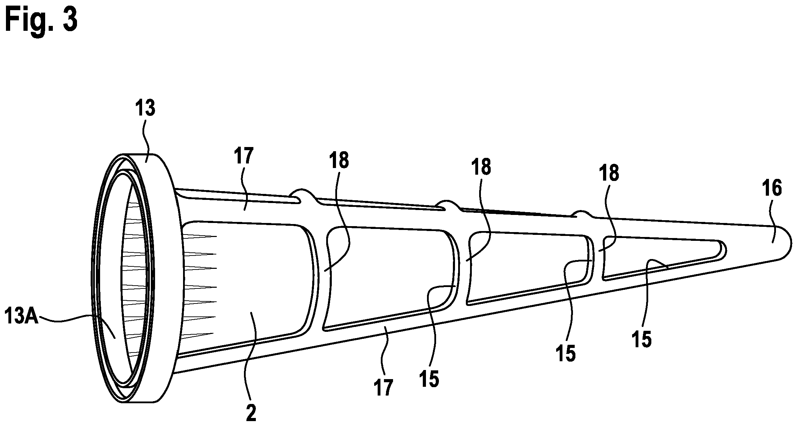

Fig. 2 zeigt rein beispielhaft eine Schnittansicht der Filtereinrichtung 100. Fig. 3 zeigt die Filtereinrichtung 100 aus Fig. 2 in einer perspektivischen Ansicht ohne einen optionalen Leitungskörper 3 und ohne ein optionales Gehäuse 4.

Wie in Fig. 2 beispielhaft gezeigt, weist die Filtereinrichtung 100 eine Trägerstruktur 1 und ein Filtermedium 2 auf. Optional kann zusätzlich, wie erwähnt, ein Leitungskörper 3 vorgesehen sein. Ebenso zeigt Fig. 2, dass die Filtereinrichtung 100 eine optionales Gehäuse 4 aufweisen kann.

Wie in den Fign. 2 und 3 beispielhaft gezeigt, kann die Trägerstruktur 1 insbesondere einen Endrahmen 13, einen Endkörper oder ein Endstück 16 und zumindest zwei Längsstreben 17 aufweisen. Wie in Fig. 2 gezeigt ist, umfasst die Trägerstruktur 1 einen Strömungskörper 14. Weiter optional können ein oder mehrere Querstreben 18 vorgesehen sein wie dies insbesondere in Fig. 3 beispielhaft gezeigt ist.

Der Endrahmen 13 kann beispielsweise ringförmig sein, wie in Fig. 3 beispielhaft gezeigt, ist jedoch nicht auf diese Form beschränkt. Allgemein kann der Endrahmen 13 ein geschlossener Rahmen sein, welcher eine Öffnung 13A definiert. Der Endrahmen 13 bildet in Bezug auf eine Längsachse L1 ein erstes Ende 11 der Trägerstruktur 1. Der Endrahmen 13 kann insbesondere aus einem Kunststoffmaterial, wie z.B. einem duroplastischen oder einem thermoplastischen Kunststoffmaterial oder aus einem faserverstärkten Kunststoffmaterial gebildet sein.

Der Endkörper 16 ist entlang der Längsachse L1 beabstandet zu dem Endrahmen 13 angeordnet, wie dies in Fig. 2 beispielhaft gezeigt ist, und bildet in Bezug auf die Längsachse L1 ein zweites Ende 12 der Trägerstruktur 1. Wie in Fig. 2 beispielhaft dargestellt, kann der Endkörper 16 einen im wesentlichen dreieck- oder trapezförmigen Querschnitt aufweisen. Optional erstreckt sich die Längsachse L1 durch einen Flächenschwerpunkt der durch den Endrahmen 13 definierten Öffnung 13A und durch den Endkörper 16, wie dies in Fig. 2 rein beispielhaft dargestellt ist. Wie in Fig. 2 ferner gezeigt ist, weist der Endkörper 16 in Bezug auf eine senkrecht zur Längsachse L1 verlaufende radiale Richtung R1 einen geringeren Durchmesser oder eine geringere Erstreckung auf als der Endrahmen 13. Der Endkörper 16 kann insbesondere aus einem Kunststoffmaterial, wie z.B. einem duroplastischen oder einem thermoplastischen Kunststoffmaterial oder aus einem faserverstärkten Kunststoffmaterial gebildet sein.

Wie in den Fign. 2 und 3 weiterhin schematisch gezeigt ist, erstrecken sich die Längsstreben 17 zwischen dem Endrahmen 13 und dem Endkörper 16 und verbinden den Endkörper 16 und den Endrahmen 13. Die Längsstreben 17 können beispielsweise als sich gerade erstreckende Leisten oder Stäbe realisiert sein. Alternativ ist auch denkbar, dass die Längsstreben 17 sich schraubenförmig um die Längsachse L1 zwischen dem Endrahmen 13 und dem Endkörper 16 erstrecken. Die Längsstreben 17 sind entlang zueinander beabstandet angeordnet, insbesondere in Bezug auf eine die Längsachse L1 umschließende Umfangsrichtung. Da der Endkörper 16 in Bezug auf die radiale Richtung R1 einen geringeren Durchmesser als der Endrahmen 13 aufweist, begrenzen die Längsstreben 17 einen sich von dem ersten Ende 11 zu dem zweiten Ende 12 der Trägerstruktur 1 hin verjüngenden Innenraum 10. Wenn der Endrahmen 13 wie in Fig. 1 ringförmig ist, ergibt sich eine konische Trägerstruktur 1. Alternativ sind auch andere sich verjüngende Formen denkbar, wie z.B. eine Pyramidenform oder ein Pyramidenstumpf. Die sich in Bezug auf die Umfangsrichtung zwischen den Längsstreben 17 ergebenden Freiräume bilden Durchgänge 15 vom Innenraum 10 zu einer in Bezug auf die radiale Richtung R1 außenliegende Umgebung.

Die Umfangsstreben 18 sind zwischen dem ersten und dem zweiten Ende 11, 12 angeordnet und erstrecken sich entlang der Umfangsrichtung zwischen bzw. verbinden zumindest zwei benachbarten Längsstreben 17. Optional können die Umfangsstreben 18, wie in Fig. 3 beispielhaft gezeigt, sich um den gesamten Umfang erstrecken bzw. die Längsachse L1 umschließen. Wenn mehr als eine Umfangsstreben 18 vorgesehen ist, z.B. drei Umfangsstreben 18, wie in Fig. 3 beispielhaft dargestellt, sind diese entlang der Längsachse L1 zueinander beabstandet angeordnet und können beispielsweise parallel zueinander verlaufen. Die Durchgänge 15 sind somit als Fenster zwischen den Längsstreben 17 und den Umfangsstreben 18 ausgebildet.

Die Längsstreben 17 und die Umfangsstreben 18 können insbesondere aus einem Kunststoffmaterial, wie z.B. einem duroplastischen oder einem thermoplastischen Kunststoffmaterial oder aus einem faserverstärkten Kunststoffmaterial gebildet sein. Optional sind die Längsstreben 17, gegebenenfalls die optionalen Umfangsstreben 18, der Endrahmen 13 und der Endkörper 16 einstückig ausgebildet bzw. in einem Stück hergestellt.

Die Trägerstruktur 13 ist nicht auf die in den Fign. 2 und 3 beschriebene Gestaltung mit Längs- und Querstreben 17, 18 beschränkt. Beispielsweise kann die Trägerstruktur 13 auch einen sich flächig um die Längsachse L1 erstreckenden, sich verjüngenden Hülsenkörper mit einer Vielzahl an Durchbrüchen oder Öffnungen aufweisen. Allgemein erstreckt sich die Trägerstruktur 1 somit zwischen einem ersten Ende 11 und einem zweiten Ende 12 und definiert einen von dem ersten Ende 11 zu dem zweiten Ende 12 hin verjüngenden Innenraum 10.

Wie in Fig. 2 erkennbar, ist der Strömungskörper 14 am zweiten Ende 12 der Trägerstruktur 1 angeordnet und ragt in den Innenraum 10 hinein. Insbesondere kann der Strömungskörper 14 koaxial zu der Längsachse L1 angeordnet sein, wie in Fig. 2 beispielhaft dargestellt. Der Strömungskörper 14 ist als ein sich in Richtung des ersten Endes 11 verjüngender Körper ausgebildet. Beispielsweise kann der Strömungskörper 14 konisch sein, wie dies in Fig. 2 beispielhaft gezeigt ist. Ferner ist in Fig. 2 erkennbar, dass der Strömungskörper 14 sich von dem Endkörper 16 aus erstreckt und beabstandet zu dem ersten Ende 11, beispielsweise beabstandet zu dem Endrahmen 13, endet. Beispielsweise kann der Strömungskörper 14 in dem Innenraum 10 eine Erstreckung entlang der Längsachse L1 aufweisen, welche in einem Bereich zwischen 10 Prozent und 20 Prozent einer Erstreckung der Trägerstruktur 1 entlang der Längsachse L1 zwischen dem ersten Ende 11 und dem zweiten Ende 12 liegt. Der Strömungskörper 14 kann beispielsweise einstückig mit dem Endkörper 16 ausgebildet sein, insbesondere aus einem Kunststoffmaterial, wie oben für den Endkörper 16 beschrieben.

Das Filtermedium 2 ist in Fig. 2 teilweise transparent dargestellt und kann als ein sich zwischen einem ersten Ende 21 und einem zweiten Ende 22 erstreckender Hohlkörper realisiert sein, welcher sich von dem ersten zu dem zweiten Ende 22 hin verjüngt. Beispielsweise kann das Filtermedium 2 in seiner Form an den Innenraum 10 der Trägerstruktur 1 angepasst sein. In Fig. 2 ist beispielhaft gezeigt, dass das Filtermedium 2 als konischer Hohlkörper ausgebildet ist. Das Filtermedium 2 kann z.B. porös oder perforiert sein und ist allgemein durchlässig für flüssige und/oder gasförmige Fluide.

Wie in den Fign. 2 und 3 schematisch dargestellt, ist das Filtermedium 2 in dem Innenraum 10 der Trägerstruktur 1 aufgenommen, wobei das erste Ende 21 des Filtermediums 2 im Bereich des ersten Endes 11 der Trägerstruktur 1 und das zweite Ende 21 des Filtermediums 2 im Bereich des zweiten Endes 12 der Trägerstruktur 1 angeordnet ist. Das erste Ende 21 des Filtermediums 2 kann z.B. an dem Endrahmen 13 befestigt sein. Das zweite Ende 22 des Filtermediums 2 kann z.B. eine Öffnung aufweisen, durch welche der Strömungskörper 14 der Trägerstruktur 1 hindurch ragt. Das Filtermedium 2 kann optional auch an den Längsstreben 17 und/oder den Querstreben 18 befestigt sein.

Wie in Fig. 2 beispielhaft gezeigt, kann der optionale Leitungskörper 3 kann als ein Rohrstück realisiert sein. Allgemein definiert der Leitungskörper 3 einen sich zwischen einer Einlassöffnung 31 und einer Auslassöffnung 32 erstreckenden Strömungskanal 30. Wie in Fig. 2 beispielhaft gezeigt, kann der Strömungskanal 30 einen ersten Abschnitt oder Zulaufabschnitt 33 aufweisen, welcher sich von der Einlassöffnung 31 aus erstreckt, und einen zweiten Abschnitt oder Auslassabschnitt 34, welcher den ersten Abschnitt 33 mit der Auslassöffnung 32 verbindet. Der erste Abschnitt oder Zulaufabschnitt 33 kann insbesondere einen konstanten Strömungsquerschnitt oder Durchmesser aufweisen. Beispielsweise kann der Zulaufabschnitt 33 zylinderförmig oder rechteckförmig sein. Der zweite Abschnitt oder Auslassabschnitt 34 kann einen sich zu der Auslassöffnung 32 hin weitenden Strömungsquerschnitt oder Durchmesser aufweisen. Beispielsweise kann der Auslassabschnitt 34 konisch oder pyramidenstumpfförmig sein. Anstelle eines Zulaufabschnitts 33 mit konstanten Strömungsquerschnitt kann sich der Strömungskanal 30 auch kontinuierlich von der Einlassöffnung 31 zur Auslassöffnung 32 hin aufweiten. Allgemein weist der Strömungskanal 30 somit zumindest einen sich zu der Auslassöffnung 32 hin weitenden Auslassabschnitt 34 auf.

Wie in Fig. 2 schematisch dargestellt, ist der Auslassabschnitt 34 bzw. die Auslassöffnung 32 der Trägerstruktur 1 zugewandt und ragt an dem ersten Ende 11 in den Innenraum 10 der Trägerstruktur 1 hinein. Insbesondere erstreckt sich der Leitungskörper 3 durch die Öffnung 13A des Endrahmens 13 hindurch in den durch das Filtermedium 2 umgrenzten Hohlraum hinein. Somit kann Fluid durch den Strömungskanal 30 in den Innenraum 10 bzw. den Hohlraum hinein und aus diesem heraus transportiert werden. Der sich zur Auslassöffnung 32 hin weitenden zweite Abschnitt 34 verringert dabei vorteilhaft Strömungsverluste.

Wie in Fig. 2 weiterhin beispielhaft dargestellt ist, definiert das optionale Gehäuse 4 einen sich zwischen einer ersten Öffnung 41 und einer zweiten Öffnung 42 erstreckenden Aufnahmeraum 40. Das Gehäuse 4 kann, wie in Fig. 2 beispielhaft gezeigt, insbesondere als ein Rohrstück realisiert sein. Die Trägerstruktur 1 ist in dem Aufnahmeraum 40 des Gehäuses 4 aufgenommen. Wie in Fig. 2 gezeigt, ist hierbei das erste Ende 11 der Trägerstruktur 1 der ersten Öffnung 41 zugewandt gelegen bzw. kann das erste Ende 11 der Trägerstruktur 1 der ersten Öffnung 41 gelegen sein. Wie in Fig. 2 schematisch gezeigt, kann ein Außenumfang der Trägerstruktur 1, z.B. des Endrahmens 13, mit einem Innenumfang des Gehäuses 4 verbunden sein, z.B. mit diesem verschweißt, verklebt oder verrastet.

Wie in Fig. 2 ebenfalls schematisch und rein beispielhaft dargestellt ist, kann der Leitungskörper 3 eine an seinem Außenumfang ausgebildete Verbindungsstruktur 35 aufweisen, welche z.B. im Bereich des Auslassabschnitts 34 angeordnet sein kann. Die Verbindungsstruktur 35 kann beispielsweise ein von dem Außenumfang vorspringender Kragen 36 sein, welcher sich entlang der Längsachse L1 erstreckt. Wie in Fig. 2 beispielhaft gezeigt, kann der Kragen 36 in einem Spalt 45 aufgenommen sein, welcher in Bezug auf die radiale Richtung R1 zwischen dem ersten Ende 11 der Trägerstruktur 1, z.B. zwischen einem Abschnitt des Endrahmens 13, und dem Gehäuse 4 im Bereich der ersten Öffnung 41 ausgebildet ist. Dort kann der Kragen 36 z.B. verrastet, verklebt, verschweißt oder in anderer Weise befestigt sein. Allgemein kann der Leitungskörper 3 mit der Trägerstruktur 1 und/oder dem Gehäuse 4 verbunden sein.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar. Weiterhin ist die beschriebene Filtereinrichtung nicht auf den Einsatz in Kühlkreisläufen von Brennstoffzellensystemen beschränkt, sondern kann allgemein als Filter, insbesondere als Partikelfilter, in Strömungskanälen eingesetzt werden, sowohl zum Filtern von flüssigen als auch von gasförmigen Medien.

## Patentansprüche

1. Filtereinrichtung (100), insbesondere für ein flüssiges Medium wie beispielsweise ein Kühlmedium in einem Kühlkreislauf (220) eines Brennstoffzellensystems (200), aufweisend:
eine sich zwischen einem ersten Ende (11) und einem zweiten Ende (12) erstreckende Trägerstruktur (1), welche einen von dem ersten Ende (11) zu dem zweiten Ende (12) hin verjüngenden Innenraum (10) definiert, wobei die Trägerstruktur (1) an dem zweiten Ende (12) einen in Richtung des ersten Endes (11) in den Innenraum (10) hineinragenden Strömungskörper (14) aufweist, welcher sich in Richtung des ersten Endes (11) verjüngt, und wobei die Trägerstruktur (1) Durchgänge (15) aufweist, welche den Innenraum (10) fluidisch leitend mit einer Umgebung der Trägerstruktur (1) verbinden; und ein Filtermedium (2), welches in dem Innenraum (10) der Trägerstruktur (1) aufgenommen ist,
**dadurch gekennzeichnet, dass**
die Filtereinrichtung (100) zusätzlich einen an dem ersten Ende (11) in den Innenraum (10) der Trägerstruktur (1) hineinragenden Leitungskörper (3) aufweist, welcher einen sich zwischen einer Einlassöffnung (31) und einer Auslassöffnung (32) erstreckenden Strömungskanal (30) definiert;
wobei die Auslassöffnung (32) dem Innenraum (10) der Trägerstruktur (1) zugewandt gelegen ist; und
wobei der Strömungskanal (30) einen sich zu der Auslassöffnung (32) hin weitenden, insbesondere konisch weitenden, Auslassabschnitt (34) aufweist.

2. Filtereinrichtung (100) nach Anspruch 1, wobei der Strömungskanal (30) einen Zufuhrabschnitt (33) aufweist, welcher sich mit konstantem Strömungsquerschnitt erstreckt, insbesondere zylindrisch, und wobei der Auslassabschnitt (34) sich an den Zufuhrabschnitt (33) anschließt.

3. Filtereinrichtung (100) nach Anspruch 1 oder 2, wobei die Trägerstruktur (1) konisch ausgebildet ist.

4. Filtereinrichtung (100) nach einem der voranstehenden Ansprüche, wobei der Strömungskörper (14) konisch ausgebildet ist.

5. Filtereinrichtung (100) nach einem der voranstehenden Ansprüche, wobei die Trägerstruktur (1) einen das erste Ende (11) bildenden Endrahmen (13), eine das zweite Ende (12) bildenden Endkörper (16) und zumindest zwei an dem Rahmen beanstandet zueinander angeordnete Längsstreben (17) aufweist, welche den Endkörper (16) und den Endrahmen (13) verbinden, wobei die Durchgänge (15) zwischen den Längsstreben (17) ausgebildet sind.

6. Filtereinrichtung (100) nach Anspruch 5, wobei die Trägerstruktur (1) zumindest eine zwischen dem Endrahmen (13) und dem Endkörper (16) angeordnete Umfangsstrebe (18) aufweist, welche die Längsstreben (17) miteinander verbindet, wobei die Durchgänge (15) zwischen den Längsstreben (17) und der zumindest einen Umfangsstrebe (18) ausgebildet sind.

7. Filtereinrichtung (100) nach einem der voranstehenden Ansprüche, wobei die Trägerstruktur (1) aus einem Kunststoffmaterial, insbesondere einem duroplastischen Kunststoffmaterial, einem thermoplastischen Kunststoffmaterial oder einem faserverstärkten Kunststoffmaterial gebildet ist.

8. Filtereinrichtung (100) nach einem der voranstehenden Ansprüche, zusätzlich aufweisend:
ein Gehäuse (4), welches einen sich zwischen einer ersten Öffnung (41) und einer zweiten Öffnung (42) erstreckenden Aufnahmeraum (40) definiert;
wobei die Trägerstruktur (1) derart in den Aufnahmeraum (40) aufgenommen ist, dass das erste Ende (11) der Trägerstruktur (1) der ersten Öffnung (41) zugewandt gelegen ist.

9. Brennstoffzellensystem (200), aufweisend:
eine Brennstoffzellenanordnung (210) mit zumindest einer Brennstoffzelle (211); und
einem thermisch an die Brennstoffzellenanordnung (210) gekoppelten Kühlkreislauf (220), welcher dazu eingerichtet ist, ein Kühlmittel zu zirkulieren, wobei der Kühlkreislauf (220) eine Filtereinrichtung (100) nach einem der voranstehenden Ansprüche aufweist, um das Kühlmittel zu filtern.

## Claims

1. Filter device (100), in particular for a liquid medium, such as for example a cooling medium in a cooling circuit (220) of a fuel-cell system (200), having:
a support structure (1) which extends between a first end (11) and a second end (12) and which defines an interior space (10) tapering from the first end (11) to the second end (12), wherein, at the second end (12), the support structure (1) has a flow body (14) which projects into the interior space (10) in the direction of the first end (11) and which tapers in the direction of the first end (11), and wherein the support structure (1) has passages (15) which connect the interior space (10) to surroundings of the support structure (1) in a fluidically conducting manner; and a filter medium (2) which is accommodated in the interior space (10) of the support structure (1),
**characterized in that**
the filter device (100) additionally has a line body (3) which, at the first end (11), projects into the interior space (10) of the support structure (1) and which defines a flow channel (30) extending between an inlet opening (31) and an outlet opening (32);
wherein the outlet opening (32) is situated directed towards the interior space (10) of the support structure (1); and
wherein the flow channel (30) has an outlet portion (34) which widens, in particular conically widens, to the outlet opening (32).

2. Filter device (100) according to Claim 1, wherein the flow channel (30) has a feed portion (33) which extends with a constant flow cross section, in particular cylindrically, and wherein the outlet portion (34) adjoins the feed portion (33).

3. Filter device (100) according to Claim 1 or 2, wherein the support structure (1) is of conical form.

4. Filter device (100) according to one of the preceding claims, wherein the flow body (14) is of conical form.

5. Filter device (100) according to one of the preceding claims, wherein the support structure (1) has an end frame (13) forming the first end (11), has an end body (12) forming the second end (16), and has at least two longitudinal struts (17) arranged spaced apart from one another on the frame and connecting the end body (16) and the end frame (13), wherein the passages (15) are formed between the longitudinal struts (17).

6. Filter device (100) according to Claim 5, wherein the support structure (1) has at least one circumferential strut (18) which is arranged between the end frame (13) and the end body (16) and which connects the longitudinal struts (17) to one another, wherein the passages (15) are formed between the longitudinal struts (17) and the at least one circumferential strut (18).

7. Filter device (100) according to one of the preceding claims, wherein the support structure (1) is formed from a plastic material, in particular a thermosetting plastic material, a thermoplastic material or a fibre-reinforced plastic material.

8. Filter device (100) according to one of the preceding claims, additionally having:
a housing (4) which defines an accommodating space (40) extending between a first opening (41) and a second opening (42);
wherein the support structure (1) is accommodated in the accommodating space (40) in such a way that the first end (11) of the support structure (1) is situated directed towards the first opening (41).

9. Fuel-cell system (200) having:
a fuel-cell arrangement (210) with at least one fuel cell (211); and
a cooling circuit (220) which is thermally coupled to the fuel-cell arrangement (210) and which is configured to circulate a coolant, wherein the cooling circuit (220) has a filter device (100) according to one of the preceding claims in order to filter the coolant.

## Revendications

1. Dispositif de filtration (100), notamment pour un milieu liquide tel que par exemple un milieu de refroidissement dans un circuit de refroidissement (220) d'un système de pile à combustible (200), présentant :
une structure de support (1) s'étendant entre une première extrémité (11) et une deuxième extrémité (12), qui définit un espace intérieur (10) se rétrécissant de la première extrémité (11) vers la deuxième extrémité (12), la structure de support (1) présentant à la deuxième extrémité (12) un corps d'écoulement (14) faisant saillie dans l'espace intérieur (10) en direction de la première extrémité (11), qui se rétrécit en direction de la première extrémité (11), et la structure de support (1) présentant des passages (15) qui relient fluidiquement l'espace intérieur (10) à un environnement de la structure de support (1) ; et un milieu filtrant (2) qui est reçu dans l'espace intérieur (10) de la structure de support (1),
**caractérisé en ce que**
le dispositif de filtration (100) présente en outre un corps de conduite (3) faisant saillie à la première extrémité (11) dans l'espace intérieur (10) de la structure de support (1), lequel corps de conduite définit un canal d'écoulement (30) s'étendant entre une ouverture d'entrée (31) et une ouverture de sortie (32) ; l'ouverture de sortie (32) étant située en face de l'espace intérieur (10) de la structure de support (1) ; et
le canal d'écoulement (30) présentant une section de sortie (34) s'élargissant vers l'ouverture de sortie (32), notamment s'élargissant de manière conique.

2. Dispositif de filtration (100) selon la revendication 1, dans lequel le canal d'écoulement (30) présente une section d'amenée (33) qui s'étend avec une section transversale d'écoulement constante, notamment cylindrique, et dans lequel la section de sortie (34) se raccorde à la section d'amenée (33).

3. Dispositif de filtration (100) selon la revendication 1 ou 2, dans lequel la structure de support (1) est réalisée sous forme conique.

4. Dispositif de filtration (100) selon l'une quelconque des revendications précédentes, dans lequel le corps d'écoulement (14) est réalisé sous forme conique.

5. Dispositif de filtration (100) selon l'une quelconque des revendications précédentes, dans lequel la structure de support (1) présente un cadre d'extrémité (13) formant la première extrémité (11), un corps d'extrémité (16) formant la deuxième extrémité (12), et au moins deux entretoises longitudinales (17) agencées de manière espacée l'une de l'autre sur le cadre, qui relient le corps d'extrémité (16) et le cadre d'extrémité (13), dans lequel les passages (15) sont réalisés entre les entretoises longitudinales (17).

6. Dispositif de filtration (100) selon la revendication 5, dans lequel la structure de support (1) présente au moins une entretoise périphérique (18) agencée entre le cadre d'extrémité (13) et le corps d'extrémité (16), qui relie les entretoises longitudinales (17) entre elles, dans lequel les passages (15) sont réalisés entre les entretoises longitudinales (17) et l'au moins une entretoise périphérique (18).

7. Dispositif de filtration (100) selon l'une quelconque des revendications précédentes, dans lequel la structure de support (1) est formée d'un matériau plastique, notamment d'un matériau plastique thermodurcissable, d'un matériau plastique thermoplastique ou d'un matériau plastique renforcé par des fibres.

8. Dispositif de filtration (100) selon l'une quelconque des revendications précédentes, présentant en outre :
un boîtier (4) définissant un espace de réception (40) s'étendant entre une première ouverture (41) et une deuxième ouverture (42) ;
dans lequel la structure de support (1) est reçue dans l'espace de réception (40) de telle sorte que la première extrémité (11) de la structure de support (1) est située en face de la première ouverture (41).

9. Système de pile à combustible (200), présentant :
un agencement de pile à combustible (210) avec au moins une pile à combustible (211) ; et
un circuit de refroidissement (220) couplé thermiquement à l'agencement de pile à combustible (210), lequel est adapté pour faire circuler un milieu de refroidissement, le circuit de refroidissement (220) présentant un dispositif de filtration (100) selon l'une quelconque des revendications précédentes pour filtrer le milieu de refroidissement.
